# EUROPEAN PATENT APPLICATION

(11) **EP 4 461 445 A1**
(43) Date of publication of application: **13.11.2024**
(21) Application number: 22918645.7
(22) Date of filing: 07.01.2022
(51) Int. Cl.: B23C 5/10

(54) **BALL END MILL**

(71) Applicant: Mitsubishi Materials Corporation, Tokyo 100-8117 (JP)
(72) Inventor: MORI, Suguru, Tokyo 100-8117 (JP); SAKAGUCHI, Koutarou, Tokyo 100-8117 (JP)
(74) Representative: Hoffmann Eitle
(86) International application number: PCT/JP2022/000366
(87) International publication number: WO 2023/132056

(57) **Abstract**

A ball end mill includes an end mill body (1); a chip discharge groove (5), a first gash (7), and a bottom cutting edge (8). A second gash (9) is formed at an interval from the bottom cutting edge (8) on at least a first wall surface (7a) of the first gash (7). A minimum curvature radius in a cross section perpendicular to an axis of the second gash (9) is larger than a minimum curvature radius in a cross section perpendicular to an axis of a groove bottom portion (7c) of the first gash (7).

## Description

### [Technical Field]

The present invention relates to a ball end mill.

An embodiment of the present invention relates to a ball end mill in which a chip discharge groove open on a tip flank of an end mill body and extending to a rear end side in an axial direction is formed in a tip portion outer periphery of the end mill body rotated in an end mill rotation direction around an axis, a concave groove-shaped gash formed such that a bottom surface of the chip discharge groove is cut out toward an inner peripheral side of the end mill body is formed in a tip portion of the chip discharge groove, and a bottom cutting edge forming a hemispherical surface shape whose rotation locus around the axis has a center on an axis and is convex toward a tip side is formed in a side ridge portion of the gash on a tip outer peripheral side of a wall surface facing the end mill rotation direction.

### [Background Art]

As this ball end mill, for example, Patent Document 1 discloses a technology as follows. In a ball end mill having a ball cutting edge (bottom cutting edge) made of single component tool material, when a cutting edge shape of the ball cutting edge is projected in a direction perpendicular to a line segment connecting a cutting edge (bottom cutting edge described above) located at 45° with respect to an end mill rotation axis from a ball center of a ball cutting edge portion, in a plane including the end mill rotation axis (axis), a rake angle at this position is 5° or larger, and a radius (R) of cutting edge bottom (gash) roundness of the end mill has a relationship of R = (0.15 to 0.3) × D with respect to an end mill diameter (D).

### [Citation List]

### [Patent Document]

[Patent Document 1]
Japanese Unexamined Patent Application, First Publication No. H05-042410

### [Summary of Invention]

### [Technical Problem]

However, as in the ball end mill disclosed in Patent Document 1, when a size of a chip pocket is increased by setting the radius (R) of the cutting edge bottom roundness of the bottom cutting edge located at 45° with respect to the end mill rotation axis from the ball center of the ball cutting edge portion to R = (0.15 to 0.3) × D with respect to the end mill diameter (D), cutting performance is improved by setting the rake angle to 5° or larger, a wedge angle of the bottom cutting edge decreases, thereby causing degraded strength. Consequently, there is a possibility of chipping, damage, or the like in the bottom cutting edge.

In addition, the gash extends to a vicinity of an end mill rotation center through which the axis passes on a tip flank of the end mill body while maintaining the radius of the cutting edge bottom roundness and the rake angle of the bottom cutting edge. According to this configuration, since a circumferential speed is close to zero, the strength of the bottom cutting edge is degraded, and chipping, damage, or the like is likely to occur even in the vicinity of the end mill rotation center to which a large cutting load is applied.

On the other hand, when the wedge angle of the bottom cutting edge is increased by reducing the rake angle of the bottom cutting edge and reducing the chip pocket, the strength of the bottom cutting edge can be ensured. However, in this configuration, when the end mill body is rotated at a high speed to carry out cutting work or when the cutting work is carried out with a large cutting amount, chip discharge performance is impaired, and chip clogging occurs. Consequently, cutting resistance increases.

The present invention is made in view of the above-described circumstances, and an object thereof is to provide a ball end mill having a long end mill life.

An embodiment of the present invention is to provide a ball end mill which can suppress a possibility of chipping, damage, or the like in a bottom cutting edge by suppressing the strength degradation of the bottom cutting edge while suppressing an increase in cutting resistance due to chip clogging by ensuring satisfactory chip discharge performance.

### [Solution to Problem]

According to an aspect of the present invention, there is provided a ball end mill including an end mill body rotated in an end mill rotation direction around an axis, a chip discharge groove located on a tip portion outer periphery of the end mill body, open on a tip flank of the end mill body, and extending to a rear end side in an axial direction, a concave groove-shaped first gash located in a tip portion of the chip discharge groove, and formed such that a bottom surface of the chip discharge groove is cut out to an inner peripheral side of the end mill body, and a bottom cutting edge located in a side ridge portion of the first gash on a tip outer peripheral side of a first wall surface facing the end mill rotation direction, and forming a hemispherical surface shape whose rotation locus around the axis has a center on the axis and is convex to a tip side. The first gash includes the first wall surface, a bottom surface facing a tip outer peripheral side of the end mill body, and a groove bottom portion extending between the bottom surface and the first wall surface. At least the first wall surface of the first gash is provided with a concave groove-shaped second gash formed such that the first wall surface is further cut out at an interval from the bottom cutting edge. A minimum curvature radius in a cross section orthogonal to an axis of the second gash is larger than a minimum curvature radius in a cross section orthogonal to an axis of the groove bottom portion of the first gash.

In the ball end mill configured in this way, the concave groove-shaped second gash formed such that the first wall surface is further cut out is formed on at least the first wall surface facing the end mill rotation direction in the concave groove-shaped first gash formed in the tip portion of the chip discharge groove. The second gash is formed at an interval from the bottom cutting edge formed in the side ridge portion on the tip outer peripheral side of the first wall surface facing the end mill rotation direction of the first gash.

Therefore, a wedge angle of the bottom cutting edge can be largely ensured by the first wall surface of the first gash even in the vicinity of the end mill rotation center or even on the outer peripheral side of the end mill body. In addition, a size of the chip pocket can be largely ensured by the second gash formed such that at least the first wall surface of the first gash is cut out. Therefore, an increase in cutting resistance due to chip clogging can be suppressed by improving chip discharge performance while a possibility of chipping, damage, or the like caused by degraded strength of the bottom cutting edge due to the reduced wedge angle of the bottom cutting edge can be suppressed.

Moreover, the minimum curvature radius in the cross section orthogonal to the axis of the second gash, that is, the radius of the cutting edge bottom roundness is larger than the minimum curvature radius in the cross section orthogonal to the axis of the groove bottom portion of the first gash. According to this configuration, it is possible to prevent a possibility that stress is concentrated on the bottom cutting edge by forming the second gash, and it is possible to ensure rigidity of the bottom cutting edge. As a result, it is possible to extend an end mill life.

When the second gash is formed over the bottom surface across the groove bottom portion from the first wall surface of the first gash, when viewed in a direction facing the first wall surface along a straight line passing through an intersection portion between the groove bottom portion of the first gash and the second gash and orthogonal to the first wall surface, it is desirable that an angle formed by a straight line passing through the intersection portion between the groove bottom portion and the second gas from a center of a hemisphere formed by a rotation locus around the axis of the bottom cutting edge with respect to an axis extending to the tip side from a center of the bottom cutting edge to the tip side with respect to the axis of the bottom cutting edge is within a range of 40° to 85°. The angle may be 45° or larger, 50° or larger, or 55° or larger. The angle may be 80° or smaller, 75° or smaller, or 70° or smaller.

When the second gash is formed over the bottom surface across the groove bottom portion from the first wall surface of the first gash, the intersection portion between the groove bottom portion and the second gash is one of boundary portions on the tip side of the first gash and the second gash in the axial direction. When the angle formed by the straight line passing through the intersection portion from the center of the bottom cutting edge with respect to the axis extending to the tip side from the center of the bottom cutting edge is smaller than 40°, the second gash is too close to the vicinity of the end mill rotation center. Consequently, there is a possibility that chipping, damage, or the like is likely to occur in the bottom cutting edge.

On the other hand, when the angle formed by the straight line passing through the intersection portion from the center of the bottom cutting edge with respect to the axis extending to the tip side from the center of the bottom cutting edge is larger than 85°, a large portion of a rake face of the bottom cutting edge is occupied by the first wall surface of the first gash. Consequently, there is a possibility that it is difficult to improve chip discharge performance.

It is desirable that the minimum curvature radius in the cross section orthogonal to the axis of the second gash is within a range of 0.03 × R to 0.2 × R with respect to a radius R of the hemisphere formed by the rotation locus around the axis of the bottom cutting edge. When the minimum curvature radius of the second gash is smaller than the above-described range, the second gash is reduced. Consequently, there is a possibility that chip discharge performance is less likely to be improved. When the minimum curvature radius of the second gash is larger than the above-described range, the first gash is excessively cut out. Consequently, there is a possibility that the strength of the bottom cutting edge is less likely to be ensured. The minimum curvature radius may be 0.05 × R or larger, or may be 0.07 × R or larger with respect to the radius R. The minimum curvature radius may be 0.15 × R or smaller, or may be 0.12 × R or smaller with respect to the radius R.

In addition, it is desirable that the minimum curvature radius in the cross section orthogonal to the axis of the groove bottom portion of the first gash is within a range of 0.005 × R to 0.15 × R with respect to the radius R of the hemisphere formed by the rotation locus around the axis of the bottom cutting edge. When the minimum radius of the groove bottom portion of the first gash is smaller than the above-described range, chips may be caught in the groove bottom portion. Consequently, there is a possibility of clogging. When the minimum radius of the groove bottom portion of the first gash is larger than the above-described range, there is a possibility that the strength of the bottom cutting edge on the tip side in the axial direction is impaired compared to the second gash. The minimum curvature radius may be 0.01 × R or larger, or may be 0.05 × R or larger with respect to the radius R. The minimum curvature radius may be 0.12 × R or smaller, or may be 0.1 × R or smaller with respect to the radius R.

The first wall surface between the intersection ridge line between the first wall surface and the second gash and the bottom cutting edge on the tip outer peripheral side of the end mill body may be a chamfered surface. It is desirable that a width of the chamfered surface in a radial direction with respect to a center of the hemisphere formed by the rotation locus around the axis of the bottom cutting edge is larger on the tip side in the axial direction than on the rear end side. In this manner, the strength of the bottom cutting edge can be maintained on the tip side in the axial direction to which a large cutting load is applied. On the rear end side of the bottom cutting edge in the axial direction where a large amount of chips is generated due to an increased rotation radius around the axis, chip breaking of the chips generated by the bottom cutting edge can be improved.

When the chamfered surface is provided, it is preferable that the width of the chamfered surface in the radial direction with respect to the center of the hemisphere formed by the rotation locus around the axis of the bottom cutting edge is constant on the rear end side in the axial direction. In this manner, it is possible to prevent the strength of the bottom cutting edge from being impaired more than necessary on the rear end side of the bottom cutting edge in the axial direction.

It is desirable that the width of the chamfered surface in the radial direction with respect to the center of the hemisphere formed by the rotation locus around the axis of the bottom cutting edge, which is constant on the rear end side in the axial direction, is within a range of 0.03 × R to 0.25 × R with respect to the radius R of the hemisphere formed by the rotation locus around the axis of the bottom cutting edge. When the width of the chamfered surface is smaller to fall below 0.03 × R, there is a possibility that the strength of the bottom cutting edge is impaired. When the width of the chamfered surface is larger to exceed 0.25 × R, there is a possibility that cutting resistance increases. The width may be 0.06 × R or larger, or may be 0.09 × R or larger. The width may be 0.2 × R or smaller, or may be 0.15 × R or smaller.

A configuration may be adopted as follows. When viewed in the direction facing the first wall surface along the straight line passing through an intersection portion between the groove bottom portion and the second gash and orthogonal to the first wall surface, an intersection ridge line between the first wall surface and the second gash on a tip side of the end mill body has a convex curve shape which is convex to the tip side in the axial direction. In this case, it is desirable that an angle formed by a tangent line in contact with a convex curve formed by the intersection ridge line on the tip side of the end mill body from the center of the hemisphere formed by the rotation locus around the axis of the bottom cutting edge with respect to the axis extending to the tip side from the center of the hemisphere formed by the rotation locus around the axis of the bottom cutting edge is within a range of 35° to 75°. The angle may be 40° or larger, and 45° or larger, or may be 50° or larger. The angle may be 70° or smaller, and 65° or smaller, or may be 60° or smaller.

In this case, the above-described tangent line indicates a position around the center of the bottom cutting edge from the axis on the tip side of the center of the bottom cutting edge to the tip of the chamfered surface. When the angle formed by the tangent line falls below 35°, the chamfered surface is too close to the end mill rotation center. Consequently, there is a possibility that cutting quality of the bottom cutting edge is degraded. In addition, when the angle formed by the tangent line exceeds 75°, the chamfered surface is formed from the rear end side in the axial direction. Consequently, there is a possibility that chip breaking cannot be improved on the tip side.

On the other hand, a configuration may be adopted in which the first gash and the second gash are formed to be twisted toward a side opposite to the end mill rotation direction as the first gash and the second gash are extended toward the rear end side in the axial direction. In this case, it is desirable that a helix angle formed by a second gash twisted line connecting a groove bottom position having a shortest distance from an axis of an arc having the minimum curvature radius of a cross section orthogonal to the axis of the second gash in the axial direction with respect to an axis is larger than a helix angle formed by a first gash twisted line connecting the groove bottom position having the shortest distance from the axis of the arc having the minimum curvature radius in the cross section orthogonal to the axis of the groove bottom portion of the first gash in the axial direction with respect to the axis.

In this manner, the second gash is formed to be twisted toward the side opposite to the end mill rotation direction as the second gash is extended toward the rear end side in the axial direction with the helix angle larger than the helix angle of the first gash. In this manner, the second gash can be formed to be deeper than the first wall surface of the first gash on the rear end side in the axial direction. Therefore, chip discharge performance can be further improved. Chip breaking performance can be improved by increasing a falling difference from the bottom cutting edge to the second gash.

It is desirable that a difference between the helix angle of the second gash twisted line with respect to the axis and the helix angle of the first gash twisted line with respect to the axis is within a range of 2° to 15°. When the difference between the helix angles falls below 2°, the second gash cannot be formed to be deeper than the first wall surface of the first gash. Consequently, there is a possibility that chip discharge performance or chip breaking performance cannot be sufficiently improved. When the difference between the helix angles exceeds 15°, the second gash is too deep on the rear end side. Consequently, there is a possibility that the strength of the bottom cutting edge or the end mill body is degraded. The difference between the helix angles may be 4° or larger, or may be 6° or larger. A difference β-α between the helix angles may be 12° or smaller, or may be 9° or smaller.

It is desirable that when the first gash twisted line extends to the rear end side in the axial direction while maintaining the helix angle with respect to the axis, with respect to a straight line intersecting the second gash and connecting the axis in the cross section orthogonal to the axis and the groove bottom position of the first gash, a straight line connecting the axis on the same cross section and the groove bottom position of the second gash is shifted in the end mill rotation direction around the axis as the center.

That is, the straight line connecting the axis and the groove bottom position of the second gash is shifted in the end mill rotation direction around the axis as the center, with respect to the straight line connecting the axis and the groove bottom position of the first gash in the same cross section orthogonal to the axis, and a phase difference is provided between the groove bottom positions of the first gash and the second gash. In this manner, when cutting work is carried out with a particularly large cutting amount, the groove bottom position of the second gash where thick chips generated by the bottom cutting edge on the rear end side in the axial direction are bent can be separated away from the bottom cutting edge.

Therefore, chips can be efficiently breaked by guiding thick chips to a large chip pocket formed by the second gash and bending the thick chips in the groove bottom portion. Therefore, according to this configuration, the chip pocket formed by the second gash can be effectively used, and even when the cutting amount is large, the chips can be stably processed.

It is desirable that an intersection angle between the straight line connecting the axis and the groove bottom position of the first gash and the straight line connecting the axis and the groove bottom position of the second gash in the cross section is within a range of 5° to 30°. When the intersection angle falls below 5°, the groove bottom position of the second gash cannot be sufficiently separated away from the bottom cutting edge. Consequently, there is a possibility that the chip pocket cannot be effectively used. When the intersection angle exceeds 30°, conversely, the groove bottom position of the second gash is excessively separated away from the bottom cutting edge. Consequently, there is a possibility that cutting resistance increases. The intersection angle may be 7° or larger and 10° or larger, or may be 12° or larger. The intersection angle may be 25° or smaller, or may be 20° or smaller.

### [Advantageous Effects of Invention]

As described above, according to an aspect of the present invention, a ball end mill having a long end mill life is provided.

According to the ball end mill in the embodiment of the present invention, the second gash is formed at an interval from the bottom cutting edge. Therefore, even when cutting work is carried out with a large cutting amount, chip discharge performance can be improved, and an increase in cutting resistance due to chip clogging can be suppressed. According to the ball end mill in the embodiment of the present invention, a wedge angle of a bottom cutting edge is ensured. Therefore, the strength degradation of the bottom cutting edge can be suppressed, and a possibility of chipping, damage, or the like can be suppressed.

### [Brief Description of Drawings]

FIG. 1 is a perspective view of a tip portion of an end mill body which represents an embodiment of the present invention.
FIG. 2 is a front view when the embodiment represented in FIG. 1 is viewed from a tip side in an axial direction.
FIG. 3 is a side view in a direction of an arrow X in FIG. 2.
FIG. 4 is an enlarged side view of the tip portion of the end mill body in FIG. 3.
FIG. 5 is a cross-sectional view taken along line VV in FIG. 4.
FIG. 6 is a cross-sectional view taken along line WW in FIG. 4.
FIG. 7 is a cross-sectional view taken along line XX in FIG. 4.
FIG. 8 is a cross-sectional view taken along line YY of FIG. 4.
FIG. 9 is a cross-sectional view taken along line ZZ in FIG. 4.

### [Description of Embodiments]

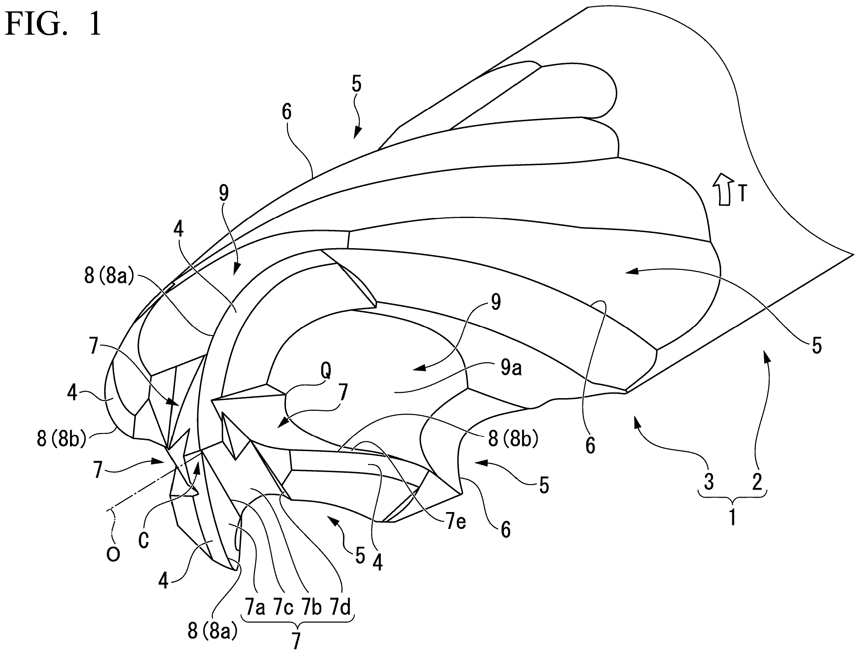

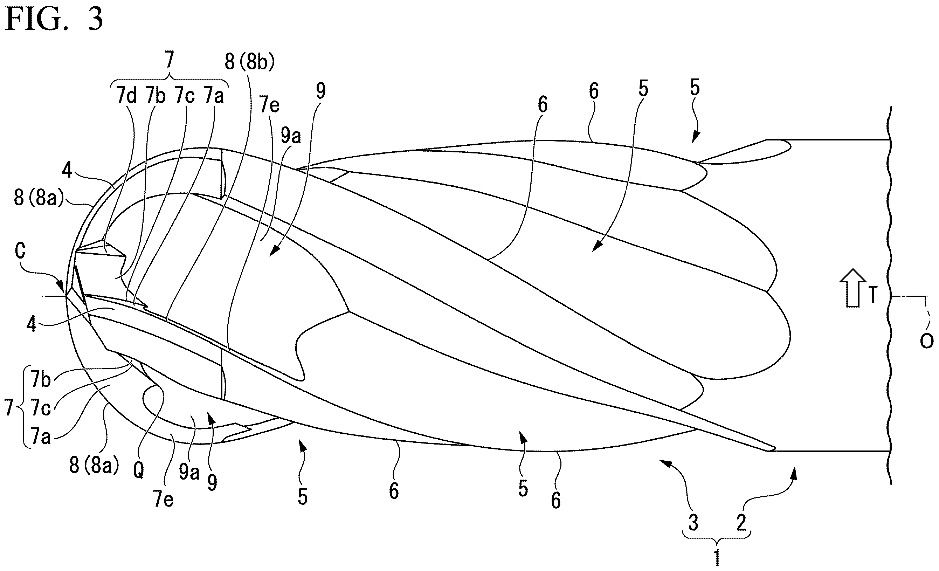

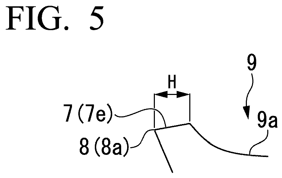

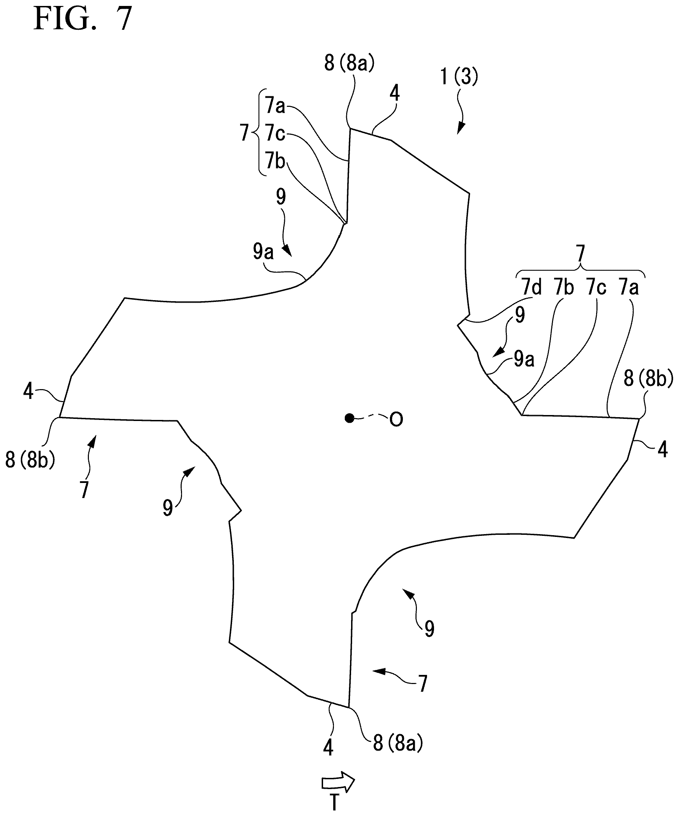

FIGS. 1 to 9 represent an embodiment of the present invention. In the present embodiment, an end mill body 1 is formed in a substantially columnar shape around an axis O as a center by using a hard material such as cemented carbide. A rear end portion (right upper side portion in FIG. 1, right side portion in FIG. 3) of the end mill body 1 serves as a shank portion 2 while maintaining the columnar shape, and a tip portion (left lower portion in FIG. 1, left portion in FIG. 3) serves as a cutting edge portion 3.

In the present specification and the drawings, a numerical range represented by using "to" means a range including numerical values before and after "to" as a lower limit value and an upper limit value. In addition, in detailed description of the invention, the same reference numerals will be assigned to components having substantially the same functional configurations, and thus, repeated description will be omitted.

In the ball end mill of the present embodiment, the shank portion 2 is gripped by a spindle of a machine tool. While the end mill body 1 is rotated around the axis O in an end mill rotation direction T, the end mill body 1 is fed in a direction perpendicular to the axis O or in a direction inclined to a direction of the axis O and a direction perpendicular to the axis O. In this manner, groove work or shoulder cutting work is carried out for a work material by a cutting edge formed in the cutting edge portion 3.

A chip discharge groove 5 open on a tip flank 4 which is a tip surface of the cutting edge portion 3, and extending to a rear end side in the direction of the axis O while being twisted to a side opposite to the end mill rotation direction T around the axis O is formed on an outer periphery of the cutting edge portion 3. In the present embodiment, four chip discharge grooves 5 are formed at an interval in a circumferential direction. The chip discharge groove 5 is cut on an outer peripheral side in a tip portion of the shank portion 2.

An outer peripheral cutting edge 6 of the cutting edge in which the wall surface is a rake face in a side ridge portion is formed on the outer peripheral side of the wall surface of the chip discharge groove 5 which faces the end mill rotation direction T. The outer peripheral cutting edge 6 according to the present embodiment is formed such that a rotation locus around the axis O forms a cylindrical shape around the axis O as the center. The outer peripheral cutting edge 6 is twisted to a side opposite to the end mill rotation direction T around the axis O as the outer peripheral cutting edge 6 is extended toward the rear end side in the direction of the axis O as in the chip discharge groove 5.

On the other hand, a tip portion of the chip discharge groove 5 is provided with a concave groove-shaped first gash 7 formed such that the wall surface facing the end mill rotation direction T of each chip discharge groove 5 and the wall surface facing the side opposite to the end mill rotation direction T are cut out toward an inner peripheral side of the end mill body 1. The first gash 7 includes a first wall surface 7a facing the end mill rotation direction T, a bottom surface 7b facing the outer peripheral side of the end mill body 1, a groove bottom portion 7c extending between the first wall surface 7a and the bottom surface 7b, and a second wall surface 7d facing a side opposite to the end mill rotation direction T in the present embodiment. The first gash 7 is formed such that a width between the first and second wall surfaces 7a and 7d is gradually widened toward the outer peripheral side of the end mill body 1.

Furthermore, a bottom cutting edge 8 is formed in a side ridge portion on the tip outer peripheral side of the first wall surface 7a where the first wall surface 7a of the first gash 7 and the tip flank 4 of the end mill body 1 intersect each other. The bottom cutting edge 8 forms a hemispherical surface shape whose rotation locus around the axis O has a center P on the axis O and is convex toward the tip side. The end mill body 1 includes a plurality of the bottom cutting edges 8. An outer peripheral end of each bottom cutting edge 8 is smoothly connected to each tip of the outer peripheral cutting edge 6 formed in the side ridge portion on the outer peripheral side of the chip discharge groove 5.

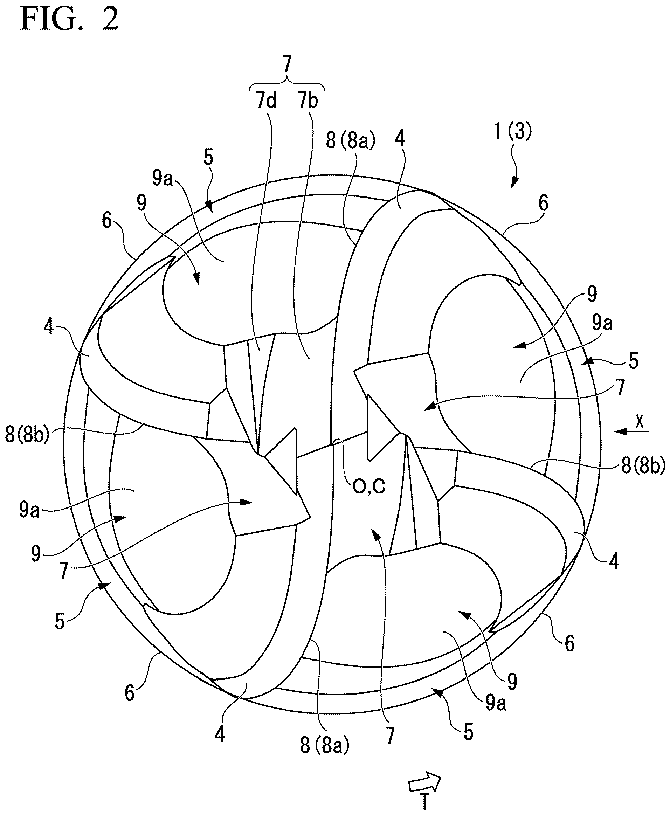

Here, as represented in FIG. 2 in the present embodiment, in the formed four bottom cutting edges 8, two bottom cutting edges (bottom cutting edges extending in an up-down direction in FIG. 2) 8 arranged every other in the circumferential direction are long bottom cutting edges 8a extending to the vicinity of the end mill rotation center C through which the axis O passes in the tip flank 4. The two remaining bottom cutting edges (bottom cutting edges extending in a right-left direction in FIG. 2) 8 arranged every other in the circumferential direction are short bottom cutting edges 8b extending from outer peripheral ends in the tip flank 4 to positions located at an interval from the end mill rotation center C, compared to the long bottom cutting edges 8a.

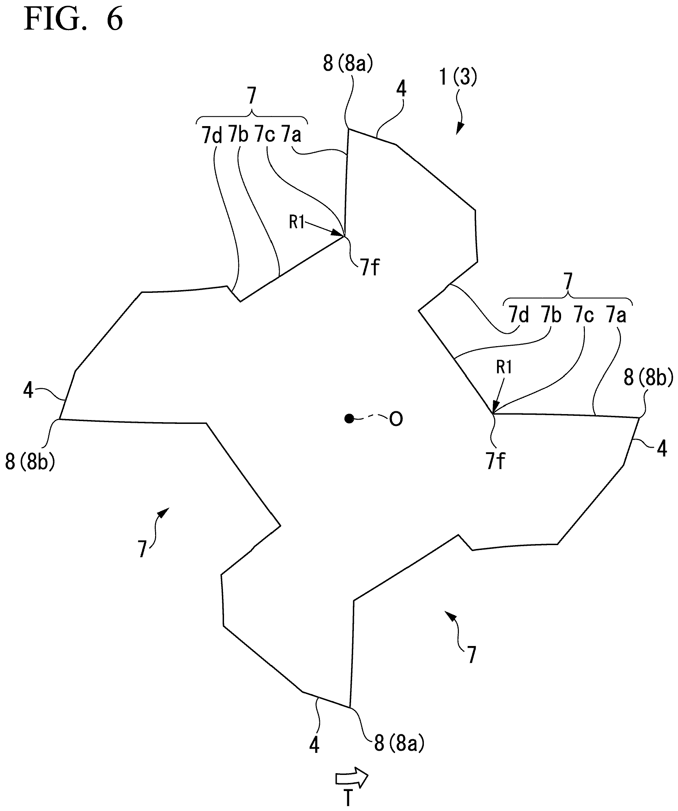

In the first gash 7 of the present embodiment, as represented in FIG. 6, the first and second wall surfaces 7a and 7d and the bottom surface 7b are formed to substantially linearly extend in a cross section orthogonal to the axis O. The groove bottom portion 7c is formed in a concave curved shape such as a concave arc whose curvature radius in contact with the first wall surface 7a and the bottom surface 7b is extremely small. It is preferable that a minimum curvature radius R1 in the cross section orthogonal to the axis O of the groove bottom portion 7c is within a range of 0.005 × R to 0.15 × R with respect to the radius R of the hemisphere formed by the rotation locus around the axis O of the bottom cutting edge 8. The minimum curvature radius R1 may be 0.01 × R or larger, or may be 0.05 × R or larger with respect to the radius R. The minimum curvature radius R1 may be 0.12 × R or smaller or, may be 0.1 × R or smaller with respect to the radius R.

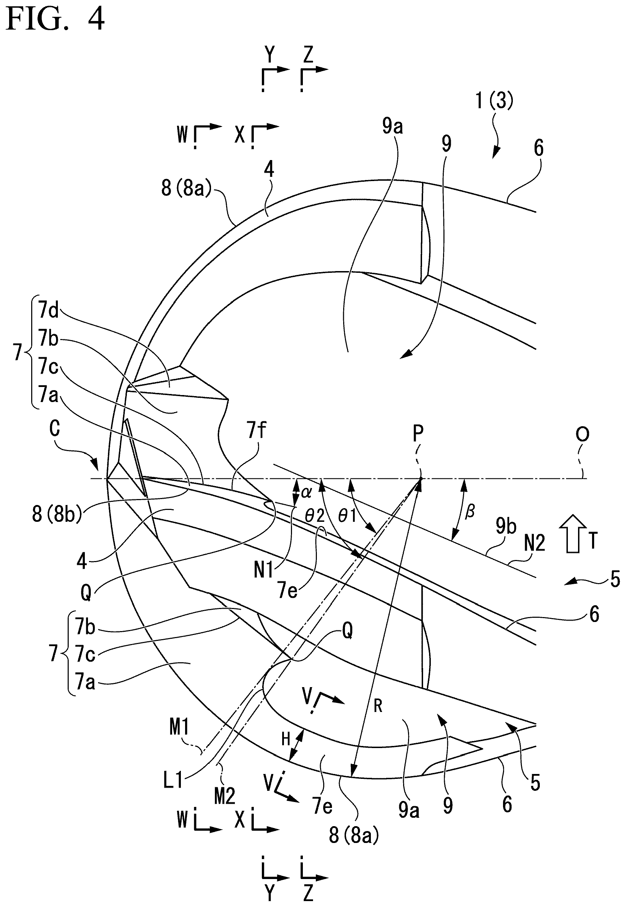

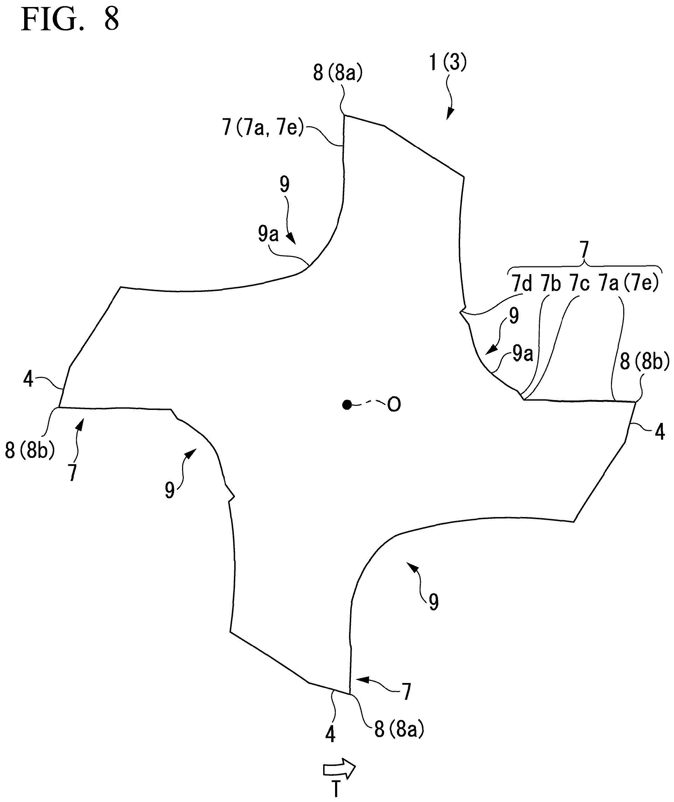

Furthermore, as represented in FIG. 4, a concave groove-shaped second gash 9 is formed at an interval from the bottom cutting edge 8 in the circumferential direction on at least the first wall surface 7a of the first gash 7 such that the first wall surface 7a is further cut out. As represented in FIG. 8, in the present embodiment, the second gash 9 is formed to extend from the first wall surface 7a of the first gash 7 in the cross section orthogonal to the axis O over the bottom surface 7b across the groove bottom portion 7c of the first gash 7 extending between the first wall surface 7a and the bottom surface 7b, to further reach the second wall surface 7d, and to be connected to the tip flank 4 adjacent to the end mill rotation direction T.

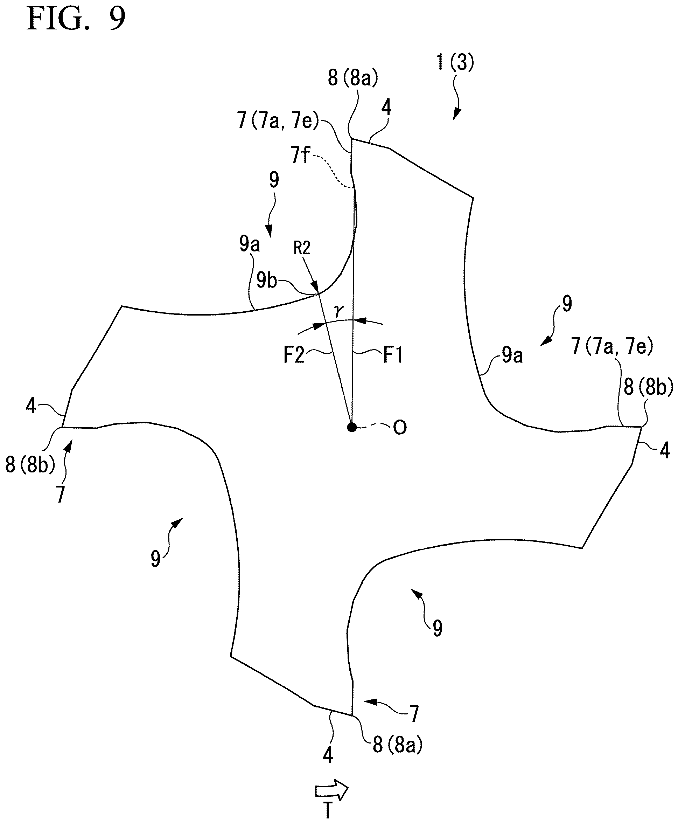

Here, as represented in FIGS. 6 to 9, the bottom surface 9a of the second gash 9 which faces the outer peripheral side of the end mill body 1 is formed to form a concave curved shape as a whole in the cross section orthogonal to the axis O. As represented in FIG. 9, the concave curve formed by the bottom surface 9a of the second gash 9 in the cross section orthogonal to the axis O has a minimum curvature radius R2 at a position of a substantial contact point between a circle inscribed in the bottom surface 9a around the axis O as the center and the bottom surface 9a. It is preferable that the minimum curvature radius R2 is within a range of 0.03 × R to 0.2 × R with respect to the radius R of the hemisphere formed by the rotation locus around the axis O of the bottom cutting edge 8. The minimum curvature radius R2 may be 0.05 × R or larger, or may be 0.07 × R or larger with respect to the radius R. The minimum curvature radius R2 may be 0.15 × R or smaller, or may be 0.12 × R or smaller with respect to the radius R.

The minimum curvature radius R2 in the cross section orthogonal to the axis O of the second gash 9 is larger than the minimum curvature radius R1 in the cross section orthogonal to the axis O of the groove bottom portion 7c of the first gash 7.

In addition, the second gash 9 having the concave curved shape in the cross section orthogonal to the axis O is formed over the bottom surface 7b across the groove bottom portion 7c from the first wall surface 7a of the first gash 7, and intersects the first wall surface 7a and the bottom surface 7b which form a linear shape in the cross section. According to this configuration, as represented in FIGS. 3 and 4, when viewed in a direction facing the first wall surface 7a, an intersection ridge line L1 between the first wall surface 7a on the tip side of the end mill body 1 and the second gash 9 and an intersection ridge line between the bottom surface 7b and the second gash 9 form a convex curved mountain shape which is convex on the tip side in the direction of the axis O. An intersection portion Q between the groove bottom portion 7c and the second gash 9 is formed in a valley shape interposed between the mountain shapes formed by the intersection ridge line L1 between the first wall surface 7a and the bottom surface 7b.

In the present embodiment, it is preferable that an angle θ1 and an angle Θ2 represented in FIG. 4 are within a predetermined angle range. FIG. 4 is a view in a direction facing the first wall surface 7a along a straight line passing through the intersection portion Q between the groove bottom portion 7c and the second gash 9 and orthogonal to the first wall surface 7a. The angle θ1 is an angle formed by a tangent line M1 in contact with a convex curve formed by the intersection ridge line L1 between the first wall surface 7a and the second gash 9 in a region on the tip side of the end mill body 1 from the center P of the bottom cutting edge 8 with respect to the axis O extending to the tip side from the center P of the bottom cutting edge 8. It is preferable that the angle θ1 is within a range of 35° to 75°. The angle Θ1 may be 40° or larger and 45° or larger, or may be 50° or larger. The angle Θ1 may be 70° or smaller and 65° or smaller, or may be 60° or smaller.

The angle Θ2 is an angle formed by a straight line M2 passing through the intersection portion Q between the groove bottom portion 7c and the second gash 9 from the center P of the bottom cutting edge 8 with respect to the axis O extending to the tip side from the center P of the bottom cutting edge 8, when viewed in the direction facing the first wall surface 7a. It is preferable that the angle Θ2 is within a range of 40° to 85°. The angle Θ2 may be 45° or larger and 50° or larger, or may be 55° or larger. The angle Θ2 may be 80° or smaller and 75° or smaller, or may be 70° or smaller.

On the first wall surface 7a of the first gash 7, a region interposed between the second gash 9 and the bottom cutting edge 8 in the radial direction is a chamfered surface 7e. More specifically, an intersection ridge line in which the outer peripheral side of the end mill body 1 is extended to the rear end side from a protruding end on the tip side in the direction of the axis O of the intersection ridge line L1 forming a mountain shape between the first wall surface 7a of the first gash 7 and the second gash 9, and a portion of the first wall surface 7a which remains at an interval between the second gash 9 and the bottom cutting edge 8 are the chamfered surface 7e formed such that a ridge line portion serving as the bottom cutting edge 8 is chamfered when the second gash 9 and the tip flank 4 are caused to extend and intersect each other in the end mill rotation direction T without any change. Therefore, a portion of the first wall surface 7a on the rear end side in the direction of the axis O with respect to the tangent line M1 is the chamfered surface 7e.

A width H of the chamfered surface 7e in the radial direction with respect to the center P of the bottom cutting edge 8 is larger on the tip side in the direction of the axis O than on the rear end side. In the present embodiment, the width H of the chamfered surface 7e is widest on the tangent line M1, is gradually narrowed toward the rear end side, and has a constant size on the rear end side in the direction of the axis O while maintaining the narrowed width.

An intersection ridge line between the first wall surface 7a and the second gash 9 on the outer peripheral side of the end mill body 1 forms a convex curve which is convex toward the bottom cutting edge 8 side. A narrowed ratio of the width H of the chamfered surface 7e decreases toward the rear end side on the tip side in the direction of the axis O, and the width H is constant on the rear end side in the direction of the axis O as described above. It is preferable that the constant width H of the chamfered surface 7e on the rear end side of the bottom cutting edge 8 with respect to the center P of the bottom cutting edge 8 in the radial direction is within a range of 0.03 × R to 0.25 × R with respect to the radius R of the hemisphere formed by the rotation locus around the axis O of the bottom cutting edge 8. The width H may be 0.06 × R or larger, or may be 0.09 × R or larger. The width H may be 0.2 × R or smaller, or may be 0.15 × R or smaller.

Furthermore, in the present embodiment, the first and second gashes 7 and 9 are formed to be twisted toward a side opposite to the end mill rotation direction T as the first and second gashes 7 and 9 are extended toward the rear end side in the direction of the axis O in accordance with twisting of the chip discharge groove 5. Therefore, the first and second wall surfaces 7a and 7d and the bottom surface 7b of the first gash 7 which form a substantially linear shape in the cross section perpendicular to the axis O are formed in a twisted surface shape in the direction of the axis O.

In addition, in the present embodiment, a helix angle β of the second gash twisted line N2 is larger than a helix angle α of the first gash twisted line N1 represented in FIG. 4.

The first gash twisted line N1 is a twisted line connecting the groove bottom position 7f of the first gash 7 in the direction of the axis O. As represented in FIG. 6, the groove bottom position 7f is a position having a shortest distance from the axis O of the arc having the minimum curvature radius R1 in the cross section perpendicular to the axis O of the groove bottom portion 7c of the first gash 7. The helix angle α is a helix angle of the first gash twisted line N1 with respect to the axis O.

The second gash twisted line N2 is a twisted line connecting the groove bottom position 9b of the second gash 9 in the direction of the axis O. As represented in FIG. 9, the groove bottom position 9b is a position having a shortest distance from the axis O of the arc having the minimum curvature radius R2 in the cross section perpendicular to the axis O of the second gash 9. The helix angle β is a helix angle of the second gash twisted line N2 with respect to the axis O.

In the present embodiment, it is preferable that a difference β-α between the helix angle β of the second gash twisted line N2 with respect to the axis O and the helix angle α of the first gash twisted line N1 with respect to the axis O is within a range of 2° to 15°. The difference β-α may be 4° or larger, or may be 6° or larger. The difference β-α may be 12° or smaller, or may be 9° or smaller.

Furthermore, in the present embodiment, as represented in FIG. 9, a straight line F1 and a straight line F2 which define the groove bottom position of the gash in the same cross section perpendicular to the axis are shifted in the end mill rotation direction T around the axis O as the center. As represented in FIG. 9, the straight line F1 and the straight line F2 are defined in the cross section intersecting the second gash 9 and orthogonal to the axis O.

The straight line F1 is a straight line connecting the first groove bottom position 7f in the cross section and the axis O in the cross section when the first gash twisted line N1 is extended to the rear end side in the direction of the axis O while maintaining the helix angle α with respect to the axis O.

The straight line F2 is a straight line connecting the axis O and the groove bottom position 9b of the second gash 9 in the same cross section as the cross section defining the straight line F1.

In the present embodiment, as represented in FIG. 9, it is preferable that an intersection angle γ between the straight line F1 connecting the axis O in the cross section having a phase difference in the straight lines F1 and F2 and the groove bottom position 7f of the first gash 7 and the straight line F2 connecting the axis O and the groove bottom position 9b of the second gash 9 is within a range of 5° to 30°. The intersection angle γ may be 7° or larger and 10° or larger, or may be 12° or larger. The intersection angle γ may be 25° or smaller, or may be 20° or smaller.

In the ball end mill configured in this way, the first wall surface 7a facing at least the end mill rotation direction T of the concave groove-shaped first gash 7 formed in the tip portion of the chip discharge groove 5 is provided with the concave groove-shaped second gash 9 formed such that the first wall surface 7a of the first gash 7 is further cut out at an interval from the bottom cutting edge 8 formed in the side ridge portion on the tip outer peripheral side of the first wall surface 7a.

Therefore, the size of the chip pocket accommodating the chips can be largely ensured by the second gash 9 formed such that the first wall surface 7a of the first gash 7 is cut out. On the other hand, the wedge angle of the bottom cutting edge 8 can be largely ensured by the first wall surface 7a of the first gash 7 even in the vicinity of the end mill rotation center C or even on the outer peripheral side of the end mill body 1. Therefore, since the wedge angle of the bottom cutting edge 8 is reduced, while strength degradation of the bottom cutting edge 8 can be prevented, an increase in cutting resistance due to chip clogging can be suppressed by improving chip discharge performance.

Moreover, in the present embodiment, the second gash 9 extends to the bottom surface 7b across the groove bottom portion 7c between the first wall surface 7a facing the end mill rotation direction T of the first gash 7 and the bottom surface 7b facing the outer peripheral side of the end mill body 1, and further reaches the second wall surface 7d facing the side opposite to the end mill rotation direction T. Therefore, since capacity of the chip pocket can be largely ensured by the second gash 9, satisfactory chip discharge performance can be achieved.

Furthermore, the minimum curvature radius R2 in the cross section perpendicular to the axis O of the second gash 9 is larger than the minimum curvature radius R1 in the cross section perpendicular to the axis O of the groove bottom portion 7c having the minimum radius of the first gash 7. Therefore, even when the second gash 9 having a large curvature radius of the groove bottom portion is formed, the curvature radius of the groove bottom portion 7c in a tool tip portion is small. Therefore, cutting edge tip strength of the bottom cutting edge 8 can be ensured. Therefore, rigidity of the bottom cutting edge 8 can be ensured while concentration of stress in the groove bottom portion can be prevented by forming the second gash 9. As a result, it is possible to extend an end mill life.

In addition, in the present embodiment, as described above, when the second gash 9 is formed over the bottom surface 7b facing the outer peripheral side of the end mill body 1 across the groove bottom portion 7c from the first wall surface 7a of the first gash 7, the straight line M2 passing through the intersection portion Q between the groove bottom portion 7c and the second gash 9 from the center P of the bottom cutting edge 8 is defined. In this case, it is preferable that the angle Θ2 formed by the straight line M2 with respect to the axis O extending to the tip side from the center P of the bottom cutting edge 8 is within a range of 40° to 85°. When the angle Θ2 is within the above-described range, a possibility of chipping, damage, or the like of the bottom cutting edge 8 can be prevented while more satisfactory chip discharge performance can be ensured.

That is, when the angle Θ2 formed by the straight line M2 passing through the intersection portion Q from the center C of the bottom cutting edge 8 with respect to the axis O extending to the tip side from the center P of the bottom cutting edge 8 is smaller than 40°, the second gash 9 is close to the vicinity of the end mill rotation center C, and the thickness of the end mill tip side is reduced. There is a possibility of chipping, damage, or the like in the bottom cutting edge 8.

On the other hand, when the angle θ2 formed by the straight line M2 passing through the intersection portion Q from the center P of the bottom cutting edge 8 with respect to the axis O extending to the tip side from the center P of the bottom cutting edge 8 is larger than 85°, a large portion of a rake face of the bottom cutting edge 8 is occupied by the first wall surface 7a of the first gash 7. Consequently, there is a possibility that chip discharge performance is less likely to be improved.

In addition, in the present embodiment, it is preferable that the minimum curvature radius R2 in the cross section orthogonal to the axis O of the second gash 9 is within a range of 0.03 × R to 0.2 × R with respect to the radius R of the hemisphere formed by the rotation locus around the axis O of the bottom cutting edge 8. In this manner, more satisfactory chip discharge performance can be ensured. In addition, the possibility of chipping, damage, or the like of the bottom cutting edge 8 is further suppressed.

That is, when the minimum curvature radius R2 of the second gash 9 is smaller than the above-described range, a space of the groove bottom portion of the second gash 9 is reduced. Consequently, there is a possibility that chip discharge performance is less likely to be improved. On the other hand, conversely, when the minimum curvature radius R2 of the second gash 9 is larger than the above-described range, the first gash 7 is largely cut out. When the thickness on the tool tip side is excessively small, there is a possibility that the strength of the bottom cutting edge 8 cannot be ensured.

Furthermore, in the present embodiment, it is preferable that the minimum curvature radius R1 in the cross section orthogonal to the axis O of the groove bottom portion 7c of the first gash 7 is within a range of 0.005 × R to 0.15 × R with respect to the radius R of the hemisphere formed by the rotation locus around the axis O of the bottom cutting edge 8. In this manner, satisfactory chip discharge performance can be ensured. In addition, the possibility of chipping, damage, or the like of the bottom cutting edge 8 is further suppressed.

That is, when the minimum radius R1 of the groove bottom portion 7c of the first gash 7 is smaller than the above-described range, chips may be caught in the groove bottom portion 7c. Consequently, there is a possibility of clogging. On the other hand, conversely, when the minimum radius R1 of the groove bottom portion 7c of the first gash 7 is larger than the above-described range, the thickness on the tip side in the direction of the axis O is smaller than that of the second gash 9. When the thickness on the tool tip side is excessively small, the strength of the bottom cutting edge 8 is impaired. Consequently, there is a possibility of chipping, damage, or the like.

Furthermore, the first wall surface 7a remaining between the intersection ridge line between the first wall surface 7a of the first gash 7 and the bottom surface 9a of the second gash 9 on the tip outer peripheral side of the end mill body 1 and the bottom cutting edge 8 is the chamfered surface 7e formed such that a ridge line portion serving as the bottom cutting edge 8 is chamfered when the second gash 9 and the tip flank 4 are caused to extend and intersect each other in the end mill rotation direction T without any change as described above. In the present embodiment, the width H of the chamfered surface 7e in the radial direction with respect to the center P of the bottom cutting edge 8 is larger on the tip side in the direction of the axis O than on the rear end side.

Therefore, according to the present embodiment, the strength of the bottom cutting edge 8 can be maintained on the tip side in the direction of the axis O to which a large cutting load is applied. In addition, since the rotation radius around the axis O increases, favorable chip breaking can be promoted on the rear end side of the bottom cutting edge 8 where a large amount of chips is generated.

In addition, in the present embodiment, when the width H of the chamfered surface 7e in the radial direction with respect to the center P of the bottom cutting edge 8 is larger on the tip side in the direction of the axis O than on the rear end side, the width H of the chamfered surface 7e in the radial direction with respect to the center P of the bottom cutting edge 8 is constant in the rear end side portion of the chamfered surface 7e in the direction of the axis O. Therefore, the width H is not excessively narrowed in the rear end side portion of the chamfered surface 7e in the direction of the axis O, and the strength of the bottom cutting edge 8 can be prevented from being impaired more than necessary.

Furthermore, in the present embodiment, it is preferable that the width H of the chamfered surface 7e on the rear end side of the bottom cutting edge 8 in the radial direction with respect to the center P of the bottom cutting edge 8 is within a range of 0.03 × R to 0.25 × R with respect to the radius R of the hemisphere formed by the rotation locus around the axis O of the bottom cutting edge 8. In this manner, an increase in cutting resistance can be avoided while the strength of the bottom cutting edge 8 can be maintained.

That is, when the width H of the chamfered surface 7e on the rear end side of the bottom cutting edge 8 in the radial direction with respect to the center P of the bottom cutting edge 8 is smaller to fall below 0.03 × R, the chamfered surface 7e may be excessively small. Consequently, there is a possibility that the strength of the bottom cutting edge 8 is impaired. On the other hand, when the width H is larger to exceed 0.25 × R, the chamfered surface 7e may be excessively large. Consequently, there is a possibility that cutting resistance increases.

Furthermore, in the present embodiment, when viewed in the direction facing the first wall surface 7a of the first gash 7 along the straight line passing through the intersection portion Q between the groove bottom portion 7c and the second gash 9 and orthogonal to the first wall surface 7a, it is preferable that the tangent line M1 in contact with the intersection ridge line L1 forming a convex curve shape which is convex to the tip side of the first wall surface 7a and the bottom surface 9a of the second gash 9 in the tip side of the end mill body 1 intersects the axis O extending to the tip side from the center P of the bottom cutting edge 8 at the angle θ1 within a range of 35° to 75°. Since the angle Θ1 is set to be in the above-described range, satisfactory chip breaking can be achieved while cutting quality of the bottom cutting edge 8 can be maintained.

That is, when the angle Θ1 formed by the tangent line M1 with respect to the axis O extending to the tip side from the center P of the bottom cutting edge 8 falls below 35°, the chamfered surface 7e may extend close to the end mill rotation center C. Consequently, there is a possibility that cutting quality of the bottom cutting edge 8 is degraded. On the other hand, when the angle θ1 formed by the tangent line M1 with respect to the axis O extending to the tip side from the center P of the bottom cutting edge 8 exceeds 75°, the chamfered surface 7e is excessively formed from the rear end side in the direction of the axis O. Consequently, there is a possibility that chip breaking cannot be improved on the tip side.

On the other hand, in the present embodiment, as in the chip discharge groove 5, the first and second gashes 7 and 9 are formed to be twisted toward the side opposite to the end mill rotation direction T as the first and second gashes 7 and 9 are extended toward the rear end side in the direction of the axis O. Therefore, chips generated by the bottom cutting edge 8 are fed into and discharged from the chip discharge groove 5 on the rear end side as the end mill body 1 rotates during cutting work. Therefore, satisfactory chip discharge performance can be achieved.

Furthermore, in the present embodiment, the first gash 7 and the second gash 9 are formed at mutually different helix angles such that the helix angle β with respect to the axis O of the second gash twisted line N2 connecting the groove bottom position 9b having the shortest distance from the axis O of the arc having the minimum curvature radius R2 in the cross section orthogonal to an axis O of the second gash 9 in the direction of the axis O is larger than the helix angle α with respect to the axis O of the first gash twisted line N1 connecting the groove bottom position 7f having the shortest distance from the axis O of the arc having the minimum curvature radius R1 in the cross section orthogonal to the axis O of the groove bottom portion 7c of the first gash 7 in the direction of the axis O.

Therefore, while being twisted at the helix angle β larger than the helix angle α with respect to the axis O of the first gash 7, the second gash 9 is formed to face the side opposite to the end mill rotation direction T as the second gash 9 is extended toward the rear end side in the direction of the axis O. In this manner, the second gash 9 can be formed to be deeper than the first wall surface 7a of the first gash 7 on the rear end side in the direction of the axis O.

Therefore, according to the present embodiment, capacity of the chip pocket can be further increased by the second gash 9 to further improve chip discharge performance. In addition, chip breaking performance can be improved by increasing a falling difference from the bottom cutting edge 8 to the bottom surface 9a of the second gash 9.

In the present embodiment, it is preferable that the difference β-α between the helix angle β with respect to the axis O of the second gash twisted line N2 and the helix angle α with respect to the axis O of the first gash twisted line N1 is within a range of 2° to 15°. Since the difference β-α is set to be in the above-described range, while chip discharge performance or chip breaking performance can be further improved, strength degradation of the bottom cutting edge 8 or the end mill body 1 can be prevented.

That is, when the difference β-α between the helix angles α and β is smaller to fall below 2°, the second gash 9 cannot be formed to be deeper than the first wall surface 7a of the first gash 7. Consequently, there is a possibility that chip discharge performance or chip breaking performance cannot be sufficiently improved. On the other hand, when the difference β-α between the helix angles β and α is larger to exceed 15°, the second gash 9 is excessively deeply cut on the rear end side in the direction of the axis O. Consequently, there is a possibility that the strength of the bottom cutting edge 8 or the cutting edge portion 3 of the end mill body 1 is degraded.

On the other hand, in the present embodiment, when the first gash twisted line N1 extends to the rear end side in the direction of the axis O while maintaining the helix angle α with respect to the axis O, with respect to the straight line F1 intersecting the second gash 9 and connecting the axis O in the cross section orthogonal to the axis O and the groove bottom position 7f of the first gash 7, the straight line F2 connecting the axis O on the same cross section and the groove bottom position 9b of the second gash 9 is shifted in the end mill rotation direction T around the axis O as the center.

Therefore, according to the present embodiment, the straight line F2 connecting the axis O and the groove bottom position 9b of the second gash 9 in this way is shifted from the straight line F1 connecting the axis O and the groove bottom position 7f of the first gash 7 in the end mill rotation direction T around the axis O as the center, that is, a phase difference is provided between the groove bottom positions 7f and 9b of the first and second gashes 7 and 9. When cutting work is carried out with a particularly large cutting amount, thick chips generated by the bottom cutting edge 8 on the rear end side in the direction of the axis O are bent at the groove bottom position 9b of the second gash 9. According to the above-described configuration, the groove bottom position 9b located at a position where the chips are bent can be separated away from the bottom cutting edge 8.

Therefore, the thick chips generated by large cutting are guided to the large chip pocket formed by the second gash 9, and are bent by the portion at the groove bottom position 9b. In this manner, the chips can be efficiently separated. Therefore, in the present embodiment, the chip pocket formed by the second gash 9 can be effectively used. Even when the cutting amount is large as described above, stable processing for the thick chips can be promoted.

In this case, in the present embodiment, it is preferable that the intersection angle γ between the straight line F1 connecting the axis O and the groove bottom position 7f of the first gash 7 and the straight line F2 connecting the axis O and the groove bottom position 9b of the second gash 9 in the cross section is within a range of 5° to 30°. Since the intersection angle γ is within the above-described range, while the chip pocket can be reliably and effectively used by the second gash 9 as described above, an increase in cutting resistance more than necessary due to chip clogging or the like can be prevented.

That is, when the intersection angle γ falls below 5°, the groove bottom position 9b of the second gash 9 cannot be sufficiently separated away from the bottom cutting edge 8. Consequently, there is a possibility the chip pocket cannot be effectively used by the second gash 9. On the other hand, conversely, when the intersection angle γ exceeds 30°, the groove bottom position 9b of the second gash 9 is excessively separated away from the bottom cutting edge 8, and the chips scrape the bottom surface 9a of the second gash 9 for a long time, thereby causing chip clogging or the like. Consequently, there is a possibility that cutting resistance increases.

According to the above-described embodiment, the following aspects are also understood.
(1) A ball end mill includes an end mill body rotated in an end mill rotation direction around an axis, a chip discharge groove located on a tip portion outer periphery of the end mill body, open on a tip flank of the end mill body, and extending to a rear end side in an axial direction, a concave groove-shaped first gash located in a tip portion of the chip discharge groove, and formed such that a bottom surface of the chip discharge groove is cut out to an inner peripheral side of the end mill body, and a bottom cutting edge located in a side ridge portion of the first gash on a tip outer peripheral side of a first wall surface facing the end mill rotation direction, and forming a hemispherical surface shape whose rotation locus around the axis has a center on the axis and is convex to a tip side. At least the first wall surface of the first gash is provided with a concave groove-shaped second gash formed such that the first wall surface is further cut out at an interval from the bottom cutting edge. The first wall surface between an intersection ridge line between the first wall surface and the second gash and the bottom cutting edge on the tip outer peripheral side of the end mill body is a chamfered surface. A width of the chamfered surface in a radial direction with respect to a center of the hemisphere formed by the rotation locus around the axis of the bottom cutting edge is larger on a tip side in the axial direction than on a rear end side.
(2) A ball end mill includes an end mill body rotated in an end mill rotation direction around an axis, a chip discharge groove located on a tip portion outer periphery of the end mill body, open on a tip flank of the end mill body, and extending to a rear end side in an axial direction, a concave groove-shaped first gash located in a tip portion of the chip discharge groove, and formed such that a bottom surface of the chip discharge groove is cut out to an inner peripheral side of the end mill body, and a bottom cutting edge located in a side ridge portion of the first gash on a tip outer peripheral side of a first wall surface facing the end mill rotation direction, and forming a hemispherical surface shape whose rotation locus around the axis has a center on the axis and is convex to a tip side. The first gash includes the first wall surface, a bottom surface facing a tip outer peripheral side of the end mill body, and a groove bottom portion extending between the bottom surface and the first wall surface. At least the first wall surface of the first gash is provided with a concave groove-shaped second gash formed such that the first wall surface is further cut out at an interval from the bottom cutting edge. The first gash and the second gash are formed to be twisted toward a side opposite to the end mill rotation direction as the first gash and the second gash are extended toward a rear end side in the axial direction. A helix angle formed by a second gash twisted line connecting a groove bottom position having a shortest distance from an axis of an arc having a minimum curvature radius in a cross section orthogonal to the axis of the second gash in the axial direction with respect to an axis is larger than a helix angle formed by a first gash twisted line connecting the groove bottom position having the shortest distance from the axis of the arc having the minimum curvature radius in the cross section orthogonal to the axis of the groove bottom portion of the first gash in the axial direction with respect to the axis.

### [Reference Signs List]

1: End mill body
2: Shank portion
3: Cutting edge portion
4: Tip flank
5: Chip discharge groove
6: Outer peripheral cutting edge
7: First gash
7a: First wall surface of first gash 7
7b: Bottom surface of first gash 7
7c: Groove bottom portion of first gash 7
7d: Second wall surface of first gash 7
7e: Chamfered surface
7f: Groove bottom position of first gash 7
8: Bottom cutting edge
8a: Long bottom cutting edge
8b: Short bottom cutting edge
9: Second gash
9a: Bottom surface of second gash 9
9b: Groove bottom position of second gash 9
O: Axis of end mill body 1
T: End mill rotation direction
C: End mill rotation center
P: Center of hemisphere formed by rotation locus around axis O of bottom cutting edge 8
Q: Intersection portion between groove bottom portion 7c of first gash 7 and second gash 9
R: Radius of hemisphere formed by rotation locus around axis O of bottom cutting edge 8
R1: Minimum curvature radius in cross section orthogonal to axis O of groove bottom portion 7c of first gash 7
R2: Minimum curvature radius in cross section orthogonal to axis O of bottom surface 9a of second gash 9
H: Width of chamfered surface 7e in radial direction with respect to center P of bottom cutting edge 8
L1: Intersection ridge line between first wall surface 7a and bottom surface 7b on tip side of end mill body 1 and second gash 9
M1: Tangent line in contact with convex curve formed by intersection ridge line L1 between first wall surface 7a and second gash 9 from center P of bottom cutting edge 8
Θ1: Angle formed by tangent line M1 with respect to axis O on tip side of center P of bottom cutting edge 8
M2: Straight line passing through intersection portion Q between groove bottom portion 7C and second gash 9 from center P of bottom cutting edge 8
Θ2: Angle formed by straight line M2 with respect to axis O on tip side of center P of bottom cutting edge 8
N1: First gash twisted line
N2: Second gash twisted line
α: Helix angle of first gash twisted line N1 with respect to axis O
β: Helix angle of second gash twisted line N2 with respect to axis O
F1: Straight line connecting axis O and groove bottom position 7f of first gash 7 in cross section intersecting second gash 9 and orthogonal to axis O
F2: Straight line connecting axis O and groove bottom position 9b of second gash 9 in same cross section as that of straight line F1
γ: Intersection angle of straight lines F1 and F2

## Claims

1. A ball end mill comprising:
an end mill body rotated in an end mill rotation direction around an axis;
a chip discharge groove located on a tip portion outer periphery of the end mill body, open on a tip flank of the end mill body, and extending to a rear end side in an axial direction;
a concave groove-shaped first gash located in a tip portion of the chip discharge groove, and formed such that a bottom surface of the chip discharge groove is cut out to an inner peripheral side of the end mill body; and
a bottom cutting edge located in a side ridge portion of the first gash on a tip outer peripheral side of a first wall surface facing the end mill rotation direction, and forming a hemispherical surface shape whose rotation locus around the axis has a center on the axis and is convex to a tip side,
wherein the first gash includes
the first wall surface,
a bottom surface facing a tip outer peripheral side of the end mill body, and
a groove bottom portion extending between the bottom surface and the first wall surface,
at least the first wall surface of the first gash is provided with a concave groove-shaped second gash formed such that the first wall surface is further cut out at an interval from the bottom cutting edge, and
a minimum curvature radius in a cross section orthogonal to an axis of the second gash is larger than a minimum curvature radius in a cross section of the groove bottom portion of the first gash.

2. The ball end mill according to Claim 1,
wherein the second gash is formed over the bottom surface across the groove bottom portion from the first wall surface of the first gash,
when viewed in a direction facing the first wall surface along a straight line passing through an intersection portion between the groove bottom portion of the first gash and the second gash and orthogonal to the first wall surface, an angle formed by a straight line passing through the intersection portion from a center of a hemisphere formed by a rotation locus around the axis of the bottom cutting edge with respect to an axis extending to the tip side from a center of the bottom cutting edge to the tip side with respect to the axis of the bottom cutting edge is within a range of 40° to 85°.

3. The ball end mill according to Claim 1 or 2,
wherein the minimum curvature radius in the cross section orthogonal to the axis of the second gash is within a range of 0.03 × R to 0.2 × R with respect to a radius R of the hemisphere formed by the rotation locus around the axis of the bottom cutting edge.

4. The ball end mill according to any one of Claims 1 to 3,
wherein the minimum curvature radius in the cross section orthogonal to the axis of the groove bottom portion of the first gash is within a range of 0.005 × R to 0.15 × R with respect to a radius R of the hemisphere formed by the rotation locus around the axis of the bottom cutting edge.

5. The ball end mill according to any one of Claims 1 to 4,
wherein the first wall surface between an intersection ridge line between the first wall surface and the second gash and the bottom cutting edge on the tip outer peripheral side of the end mill body is a chamfered surface, and
a width of the chamfered surface in a radial direction with respect to a center of the hemisphere formed by the rotation locus around the axis of the bottom cutting edge is larger on the tip side in the axial direction than on the rear end side.

6. The ball end mill according to Claim 5,
wherein the width of the chamfered surface in the radial direction with respect to the center of the hemisphere formed by the rotation locus around the axis of the bottom cutting edge is constant on the rear end side in the axial direction.

7. The ball end mill according to Claim 6,
wherein the width of the chamfered surface in the radial direction with respect to the center of the hemisphere formed by the rotation locus around the axis of the bottom cutting edge, which is constant on the rear end side in the axial direction, is within a range of 0.03 × R to 0.25 × R with respect to the radius R of the hemisphere formed by the rotation locus around the axis of the bottom cutting edge.

8. The ball end mill according to any one of Claims 5 to 7,
wherein when viewed in the direction facing the first wall surface along the straight line passing through an intersection portion between the groove bottom portion and the second gash and orthogonal to the first wall surface, an intersection ridge line between the first wall surface and the second gash on a tip side of the end mill body has a convex curve shape which is convex to the tip side in the axial direction, and
an angle formed by a tangent line in contact with a convex curve formed by the intersection ridge line on the tip side of the end mill body from the center of the hemisphere formed by the rotation locus around the axis of the bottom cutting edge with respect to the axis extending to the tip side from the center of the hemisphere formed by the rotation locus around the axis of the bottom cutting edge is within a range of 35° to 75°.

9. The ball end mill according to any one of Claims 1 to 8,
wherein the first gash and the second gash are formed to be twisted toward a side opposite to the end mill rotation direction as the first gash and the second gash are extended toward the rear end side in the axial direction, and
a helix angle formed by a second gash twisted line connecting a groove bottom position having a shortest distance from an axis of an arc having the minimum curvature radius in a cross section orthogonal to the axis of the second gash in the axial direction with respect to an axis is larger than a helix angle formed by a first gash twisted line connecting the groove bottom position having the shortest distance from the axis of the arc having the minimum curvature radius in the cross section orthogonal to the axis of the groove bottom portion of the first gash in the axial direction with respect to the axis.

10. The ball end mill according to Claim 9,
wherein a difference between the helix angle of the second gash twisted line with respect to the axis and the helix angle of the first gash twisted line with respect to the axis is within a range of 2° to 15°.

11. The ball end mill according to Claim 9 or 10,
wherein when the first gash twisted line extends to the rear end side in the axial direction while maintaining the helix angle with respect to the axis, with respect to a straight line intersecting the second gash and connecting the axis in the cross section orthogonal to the axis and the groove bottom position of the first gash, a straight line connecting the axis on the same cross section and the groove bottom position of the second gash is shifted in the end mill rotation direction while the axis is set as the center.

12. The ball end mill according to Claim 11,
wherein an intersection angle between the straight line connecting the axis and the groove bottom position of the first gash and the straight line connecting the axis and the groove bottom position of the second gash in the cross section is within a range of 5° to 30°.
